# DEMANDE DE BREVET EUROPEEN

(11) **EP 4 797 506 A1**
(43) Date de publication de la demande: **26.08.2026**
(21) Numéro de dépôt: 26160150.4
(22) Date de dépôt: 23.02.2026
(51) Int. Cl.: H02K 3/50, H02K 15/35

(54) **DISPOSITIF D'INTERCONNEXION POUR STATOR**

(30) Priorité: 24.02.2025 FR 2501873
(71) Demandeur: Valeo Electrification, 95892 Cergy Pontoise (FR)
(72) Inventeur: EL-BARAKA, Khadija, 94460 VALENTON (FR); JUGOVIC, Svetislav, 94460 VALENTON (FR)
(74) Mandataire: Valeo Powertrain Systems

(57) **Abrégé**

L'invention concerne un dispositif d'interconnexion (3) pour stator (1) d'une machine électrique, comprenant au moins deux interconnecteurs (4, 4a, 4b, 4c) et un élément de liaison (5), chaque interconnecteur (4, 4a, 4b, 4c) comprenant un plot (6) et au moins une portion filaire (7, 7a, 7b) solidaire du plot (6), la portion filaire (7, 7a, 7b) étant formée d'un brin massif comprenant une section principale (8), et au moins une section terminale (9) configurée pour être électriquement connectée à une bobine (2) du stator (1), l'élément de liaison (5) étant solidaire du plot (6) de chaque interconnecteur (4, 4a, 4b, 4c), caractérisé en ce que la une portion filaire (7, 7a, 7b) est divisée en une première partie (17a) et en une deuxième partie (17b), chaque partie de la portion filaire (7, 7a, 7b) s'étendant de part et d'autre du plot (6).

## Description

La présente invention se rapporte au domaine des stators pour machines électriques tournantes telles que les alternateurs, alterno-démarreurs ou encore les machines électriques de propulsion pour véhicules, tels que les véhicules automobiles, et concerne plus particulièrement un dispositif d'interconnexion pour de tels stators.

Une machine électrique tournante comprend un arbre solidaire d'un rotor et un stator agencé de manière à faire pivoter le rotor par l'intermédiaire d'un champ magnétique. Pour cela, le rotor est par exemple muni d'aimants permanents et le stator d'un bobinage électrique. Le bobinage électrique est alimenté en courant électrique de manière à générer un champ magnétique tournant au niveau du bobinage électrique. Ce champ magnétique tournant permet d'entraîner la rotation du rotor.

Pour transmettre le courant électrique à l'ensemble des bobines du stator, des éléments de connexion électrique sont répartis autour du stator afin de relier électriquement une alimentation électrique à une ou plusieurs bobines du stator, ou bien plusieurs bobines entre elles. Ces éléments de connections peuvent se présenter sous la forme de fils électriques ou encore de conducteurs électriques de type bus-barre permettant une répartition d'énergie électrique entre les bobines du stator.

Lorsque la machine électrique tournante est en fonctionnement, celle-ci génère des contraintes mécaniques, telles que des vibrations. Les éléments électriques doivent donc être fermement maintenus mécaniquement afin d'éviter des déconnexions ou des dysfonctionnements. Des éléments isolants sont donc agencés pour fixer les éléments électriques au sein de la structure. Ces éléments isolants permettent à la fois de lier certains éléments électriques entre eux mais également de les protéger.

Pour assurer cette double fonction, les éléments de liaison s'étendent de manière importante le long du stator. La fabrication des éléments de liaison implique donc un coût de production et une quantité de matières premières importants.

La présente invention s'inscrit dans ce contexte en proposant à ce titre un dispositif d'interconnexion pour stator d'une machine électrique tournante, comprenant au moins deux interconnecteurs configurés pour relier électriquement une pluralité de bobines du stator entre elles et un élément de liaison reliant mécaniquement les interconnecteurs entre eux, chaque interconnecteur comprenant un plot qui s'étend selon une direction axiale parallèle à un axe du stator et au moins une portion filaire solidaire du plot, l'au moins une portion filaire étant formée d'un brin massif comprenant une section principale solidaire du plot et qui s'étend dans un plan sécant à la direction axiale, et au moins une section terminale qui s'étend parallèlement à la direction axiale et configurée pour être électriquement connectée à une bobine du stator, l'élément de liaison étant solidaire du plot de chaque interconnecteur, caractérisé en ce que l'au moins une portion filaire est divisée en une première partie et en une deuxième partie, chaque partie de l'au moins une portion filaire s'étendant de part et d'autre du plot.

Le dispositif d'interconnexion selon l'invention permet ainsi de faciliter le bobinage du stator, principalement grâce à la portion filaire qui s'étend de part et d'autre du plot, et qui garantit une connexion filaire à des bobines agencées de chaque côté du plot du dispositif d'interconnexion, limitant le nombre de fils et de connexions électriques à mettre en œuvre pour le bobinage du stator.

Les interconnecteurs s'étendent de sorte à assurer la connexion électrique entre le plot d'alimentation électrique et les bobines du stator afin que ces dernières puissent générer le champ magnétique nécessaire à la mise en rotation du rotor.

L'interconnecteur est ainsi alimenté électriquement via le plot qui permet de transmettre le courant électrique via la portion filaire qui à son tour transmet le courant électrique aux bobines à laquelle ladite portion filaire est connectée. Bien entendu, le plot et la portion filaire sont tous deux électriquement conducteurs afin que le courant électrique puisse être transmis du plot à la portion filaire, en raison d'une soudure qui les relie.

La portion filaire est constituée par un brin massif qui est un unique brin rigide à la différence de câbles souples tressés et torsadés de l'art antérieur. Le brin massif est donc un fil électrique rigide, plus solide et résistant que les câbles souples, ce qui permet de les agencer au sein du stator sans avoir à les protéger via l'élément de liaison.

La section principale, laquelle comprenant au moins partiellement les deux parties de la portion filaire, s'étend selon un plan sécant à la direction axiale afin de s'étendre autour du stator de sorte à participer à la connexion électrique d'au moins deux bobines, ces dernières n'étant pas nécessairement adjacentes l'une par rapport à l'autre. De manière avantageuse, c'est également la section principale qui est solidaire du plot.

C'est la section terminale de la portion filaire qui est agencée au contact de l'une des bobines du stator, en étant raccordée électriquement à cette dernière. L'extension de la section terminale selon la direction axiale garantit une connexion électrique plus robuste avec la bobine du stator dont la zone connectée s'étend également selon la direction axiale. Le zone de soudure qui relie la zone connectée de la bobine avec l'extension de la section terminale est ainsi plus longue et donc plus fiable.

La portion filaire est ainsi coudée entre la section principale et la section terminale. La portion filaire comprend deux sections terminales, chacune étant agencée aux extrémités de la section principale. Chaque partie de la portion filaire comprend ainsi une section terminale afin d'assurer une connexion électrique avec une bobine de part et d'autre du plot.

L'élément de liaison relie les deux interconnecteurs via leur plot respectif. L'élément de liaison peut par ailleurs relier plus de deux interconnecteurs entre eux. Le contact électrique entre les interconnecteurs se fait exclusivement au niveau des plots et non au niveau des portions filaires.

Selon une caractéristique de l'invention, l'au moins une portion filaire s'étend intégralement en dehors de l'élément de liaison. Autrement dit, Le brin massif est dépourvu de la matière constitutive de l'élément de liaison. Une telle configuration permet de limiter grandement le coût et les matières premières nécessaires en évitant le recours à une extension spatiale de l'élément de liaison habituellement destinée à recouvrir la portion filaire. L'élément de liaison assure donc la fonction de maintien mécanique des interconnecteurs entre eux au moyen d'une quantité de matière la plus ajustée possible.

La portion filaire est donc libre, uniquement solidaire du plot, au niveau de la section principale, et des bobines du stator, au niveau des sections terminales. L'élément de liaison ne recouvrant pas la portion filaire des interconnecteurs, celui-ci est plus simple à fabriquer et nécessite moins de matière ce qui réduit considérablement son coût de production. De plus, une hauteur du dispositif d'interconnexion, c'est-à-dire une extension spatiale du dispositif d'interconnexion selon la direction axiale, est également réduite, limitant ainsi l'extension spatiale du dispositif d'interconnexion dans sa globalité.

Selon une caractéristique de l'invention, la section principale de la portion filaire comprend un pli configuré pour épouser une forme périphérique du stator. Le pli peut par exemple être une courbure brisée permettant l'extension de la section principale de façon à suivre la forme du stator et ainsi de faciliter la connexion électrique entre deux bobines de ce dernier. Avantageusement, le pli est mis en œuvre sur une zone de la section principale autre que la zone solidaire du plot afin d'éviter des fragilités de connexion mécanique ou électrique dues au pli.

Selon une caractéristique de l'invention, la portion filaire est un fil de section ronde ou polygonale au moins en partie couvert d'un revêtement émaillé électriquement isolant. Une section ronde ou par exemple rectangulaire garantit une meilleure solidarisation de la portion filaire au plot et à au moins l'une des bobines. Le revêtement émaillé électriquement isolant, en plus de protéger la portion filaire contre l'oxydation et la corrosion, assure également une protection mécanique, ce qui permet de mettre en œuvre simplement un dispositif d'interconnexion selon l'invention, c'est-à-dire sans avoir à recouvrir les portions filaires de matière constitutive de l'élément de liaison ou de gaine protectrice.

Selon une caractéristique de l'invention, la portion filaire comprend une pluralité de points de contact, chaque point de contact étant solidaire du plot ou configuré pour être solidaire d'une bobine du stator, chaque point de contact étant dépourvu du revêtement émaillé électriquement isolant. Le revêtement émaillé électriquement isolant doit être en effet absent au niveau des points de contact car la connexion électrique et la transmission du courant électrique dépendent de la qualité de la soudure entre plot et point de contact, ou extrémité de bobine et plot de contact. Ces points de contact peuvent être générés par exemple en procédant à un enlèvement de matière pour retirer le revêtement émaillé au niveau des zones où se font la liaison électrique avec le plot pour ce qui concerne la section principale, et la liaison électrique avec la ou les bobines du stator pour ce qui concerne la section terminale.

Selon une caractéristique de l'invention, le plot comprend un méplat au niveau duquel la portion filaire est solidaire dudit plot. La mise en œuvre d'un méplat permet d'avoir une zone d'appui plane pour la solidarisation entre le plot et la portion filaire. Le méplat garantit ainsi une plus grande surface de contact par rapport à une surface cylindrique, par exemple. Cela facilite d'une part l'opération de solidarisation de la portion filaire sur le plot, et d'autre part cela permet d'éviter des potentiels dysfonctionnements, par exemple des faux contacts, liés à une réduction de la surface de contact électrique. Une telle caractéristique est avantageusement combinable avec un brin massif de section polygonale, le plat offert par cette section étant bien adapté au méplat réalisé sur le plot.

Selon une caractéristique de l'invention, la section principale de la portion filaire est configurée pour être solidarisée au méplat du plot par soudage. Comme cela a été mentionné précédemment, le méplat favorise l'opération de soudage. La portion filaire est soudée au plot au niveau de son point de contact, c'est-à-dire au niveau d'une zone dépourvue de revêtement émaillé électriquement isolant.

Selon une caractéristique de l'invention, au moins un interconnecteur comprend une première portion filaire et une deuxième portion filaire, chaque portion filaire de l'interconnecteur étant solidaire du plot de l'interconnecteur et décalée l'une par rapport à l'autre selon la direction axiale. Cette configuration permet de multiplier les liaisons électriques entre bobines en agençant plusieurs portions filaires sur un seul interconnecteur, ces portions filaires étant décalées le long de la direction axiale.

Le courant électrique peut être aisément réparti entre les portions filaires via le plot qui est solidaire de chacune d'entre elles. La section principale de chaque portion filaire d'un même interconnecteur peut être orientée différemment l'une par rapport à l'autre afin de s'étendre jusqu'à différentes bobines du stator.

Selon une caractéristique de l'invention, la première portion filaire et la deuxième portion filaire s'étendent intégralement en dehors de l'élément de liaison. Autrement dit, les deux portions filaires sont dépourvues de matière constitutive de l'élément de liaison afin de limiter les coûts de production de l'élément de l'invention.

Selon une caractéristique de l'invention, l'élément de liaison comprend une tige courbée configurée pour épouser une forme périphérique du stator et une pluralité d'orifices disposés le long de la tige courbée, chaque orifice étant configuré pour recevoir le plot de l'un des interconnecteurs. La tige courbée de l'élément de liaison s'étend le long du stator afin de lier des interconnecteurs également répartis autour de celui-ci. Cela permet de lier deux, voire plus de deux, interconnecteurs adjacents les uns par rapport aux autres.

Les orifices sont cylindriques à section correspondante à la forme de la section des plots, par exemple circulaire, et sont répartis régulièrement le long de la tige courbée au niveau de la position des plots de chaque interconnecteur destiné à être lié par l'élément de liaison. Les orifices sont dimensionnés de sorte que les plots puissent y être insérés.

Selon une caractéristique de l'invention, le plot de chaque interconnecteur comprend une périphérie dentée emmanchée au sein de l'un des orifices de l'élément de liaison. C'est au niveau de la périphérie dentée du plot que le contact est opéré entre l'interconnecteur et l'élément de liaison afin d'assurer le maintien mécanique de chaque interconnecteur auquel est lié ledit élément de liaison.

La périphérie dentée est décalée axialement par rapport au méplat afin d'éviter une interférence mécanique entre la liaison mécanique entre l'élément de liaison et le plot, et la liaison mécanique et électrique entre le plot et la ou les portions filaires.

Selon une caractéristique de l'invention, la périphérie dentée de chaque interconnecteur est emmanchée dans les orifices de l'élément de liaison par montage en force ou par vibration par ultrasons. La vibration par ultrasons consiste à faire vibrer l'une des pièces pour la déformer et permettre l'emmanchement. Une fois l'emmanchement effectué, les vibrations sont arrêtées. La périphérie dentée est configurée pour créer une liaison par incrustation de matière (déformation plastique) dans la paroi interne de l'orifice de l'élément de liaison. Ainsi, liaison est définitive et auto-bloquante.

Selon une caractéristique de l'invention, l'élément de liaison comprend au moins deux orifices chacun disposés radialement de part et d'autre de la tige courbée. La position des orifices permet un décalage radial entre les différents interconnecteurs mécaniquement liés à un même élément de liaison, optimisant ainsi le positionnement des interconnecteurs vis-à-vis de différentes rangées de bobines du stator.

L'invention couvre également un stator pour machine électrique tournante, comprenant une pluralité de bobines et au moins un dispositif d'interconnexion tel que décrit précédemment reliant électriquement au moins deux bobines entre elles.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[fig 1] est une représentation schématique partielle d'un stator comprenant un dispositif d'interconnexion selon l'invention,
[fig 2] est une vue de face du dispositif d'interconnexion,
[fig 3] est une vue en éclaté du dispositif d'interconnexion.

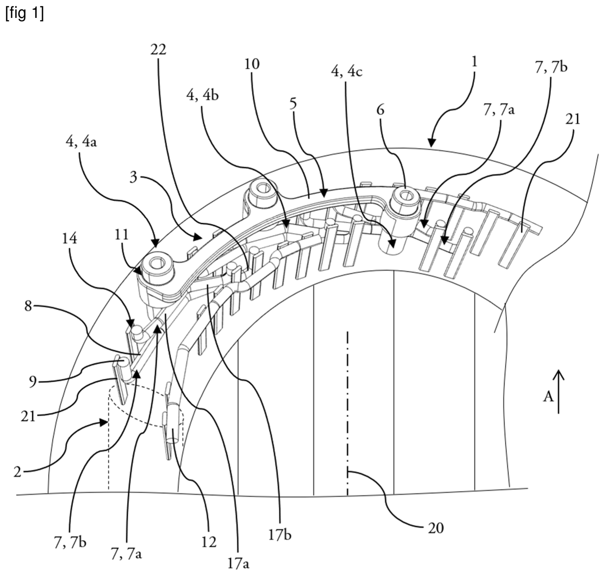

La figure 1 est une représentation schématique d'un stator 1 faisant partie d'une machine électrique tournante à flux radial pour véhicule automobile. Une tel machine électrique tournante participe notamment à la propulsion dudit véhicule, en faisant office de moteur de propulsion ou de démarreur ou d'alterno-démarreur. Une telle machine électrique tournante comprend un stator 1 de forme cylindrique, au sein duquel un rotor, non représenté sur la figure 1, est agencé. Le stator 1 comprend une pluralité de bobines 2 s'étendant le long du stator 1. Sur la figure 1, seule une bobine 2 est schématiquement représentée. Chaque bobine 2 comprend des terminaux électriques 21 assurant une connexion électrique entre une alimentation électrique et les bobines 2. Sur la figure 1, une pluralité de ces terminaux électriques 21 sont représentés.

Lorsque la machine électrique tournante est active, un courant électrique circule au sein du stator 1, et plus particulièrement au sein des bobines 2 qui génèrent alors un champ magnétique entraînant la mise en rotation du rotor. Ce dernier transforme cette énergie électrique en énergie mécanique assurant par exemple la propulsion du véhicule.

Pour alimenter chacune des bobines 2 du stator 1 en courant électrique, l'alimentation électrique évoquée précédemment doit être mise en œuvre et un courant électrique doit être transmis à chacune des bobines 2 de manière optimale, via leurs terminaux de connexion 21. Une telle transmission électrique se fait à l'aide d'au moins un dispositif d'interconnexion 3, lequel comprenant au moins deux interconnecteurs 4 et au moins un élément de liaison 5 reliant et maintenant mécaniquement les interconnecteurs 4.

Sur la figure 1 et les figures suivantes, le dispositif d'interconnexion 3 qui est illustré comprend trois interconnecteurs 4a, 4b, 4c correspondant chacun à un pôle électrique de la machine électrique, quand cette dernière est de conception triphasée. Chaque interconnecteur 4 comprend un plot 6 et deux portions filaires 7 toutes deux solidaires du plot 6 ainsi que d'au moins un terminal de connexion 21. Chaque plot 6 est configuré pour s'étendre principalement selon une direction axiale A, c'est-à-dire une direction parallèle à un axe 20 du stator 1, lequel étant également un axe de rotation du rotor de la machine électrique tournante.

Le plot 6 et les portions filaires 7 sont électriquement conducteurs afin d'assurer une transmission du courant électrique. L'alimentation électrique, non représentée sur la figure 1, est raccordée au niveau des plots 6 et le courant électrique circule au travers des portions filaires 7 et rejoint ainsi les bobines 2, fournissant ainsi de l'énergie électrique au stator 1.

Sur la figure 1 et les suivantes, chaque interconnecteur 4 comprend deux portions filaires 7a, 7b mais peut comprendre une unique portion filaire 7 ou plus de deux portions filaires 7. Dans la configuration telle qu'illustrée à la figure 1 et aux figures suivantes, les deux portions filaires 7a, 7b sont solidaires du plot en étant décalées l'une par rapport à l'autre selon la direction axiale A.

Chaque portion filaire 7 comprend une section principale 8, correspondant à la section solidaire du plot 6, s'étendant selon un plan sécant à la direction axiale A, autour des terminaux de connexion 21 des bobines 2. Une telle configuration permet une extension de la portion filaire 7 périphériquement autour du stator 1 afin d'être raccordé aux bobines 2 qui ne sont pas nécessairement adjacentes l'une par rapport à l'autre.

Les portions filaires 7 comprennent également au moins une section terminale 9 disposée à une extrémité de la section principale 8. Sur la figure 1 et les figures suivantes, chaque portion filaire 7 s'étend périphériquement de part et d'autre du plot 6 auquel elle est solidaire et comprend deux sections terminales 9 à raison d'une à chaque extrémité de la section principale 8. La section principale 8 est reliée aux sections terminales 9 par un coude 22.

Chaque section terminale 9 est orientée de manière parallèle à la direction axiale A, ou sensiblement parallèle à cette dernière. Cela permet d'orienter les sections terminales 9 de manière optimale par rapport aux terminaux de connexion 21. Chaque section terminale 9 peut alors être solidarisée à un terminal de connexion 21 de manière optimale au niveau d'un point de contact 14.

L'élément de liaison 5 comprend quant à lui une tige courbée 10 ainsi qu'une pluralité d'orifices 11 disposés le long de la tige courbée 10. La tige courbée 10 est configurée pour épouser une forme périphérique du stator 1. Cela permet de répartir chaque interconnecteur 4 autour du stator 1 pour assurer la connexion électrique de l'ensemble des bobines 2. Afin d'éviter tout dysfonctionnement électrique, l'élément de liaison 5 est en matière électriquement isolante, par exemple une matière synthétique.

L'élément de liaison 5 comprend au moins deux orifices 11 disposés radialement de part et d'autre de la tige courbée 10. Cette configuration permet d'une part de mieux aménager les interconnecteurs 4 les uns par rapport aux autres afin qu'ils ne se touchent pas entre eux, d'autre part de répartir de manière plus optimale les interconnecteurs 4 afin de pouvoir connecter électriquement les deux rangées de terminaux de connexion 21 des bobines 2.

L'élément de liaison 5 assure une fonction de support mécanique structurel pour les plots 6. Les portions filaires 7 s'étendent de manière autoportante depuis les plots, sans nécessiter de maintien ou de guidage par un capot ou une structure de recouvrement sur leur longueur, la rigidité propre de la portion filiaire assurant le maintien de leur géométrie dans l'espace.

Chaque orifice 11 de l'élément de liaison 5 est solidaire du plot 6 de l'un des interconnecteurs 4. Cette interaction entre les orifices 11 et les plots 6 garantit un maintien mécanique des interconnecteurs 4 entre eux ainsi qu'un maintien mécanique de l'ensemble des connexions électriques de chaque interconnecteur 4.

Le dispositif d'interconnexion 3 est innovant en ce que l'au moins une portion filaire 7 est divisée en une première partie 17a et en une deuxième partie 17b, chaque partie 17a, 17b de l'au moins une portion filaire 7 s'étendant de part et d'autre du plot 6. Cette extension de la portion filaire 7 de part et d'autre du plot 6 garantit une connexion électrique à au moins deux bobines 2 disposées de part et d'autre du plot 6 du dispositif d'interconnexion 3, facilitant ainsi la connexion électrique des bobines 2 du stator 1 et limitant la quantité d'éléments à intégrer pour opérer l'ensemble des connexions électriques du stator 1. Avantageusement, chaque partie 17a, 17b de la portion filaire 7 comprend une section terminale 9 afin d'assurer une connexion électrique de part et d'autre du plot 6.

Par ailleurs, l'au moins une portion filaire 7 s'étend intégralement en dehors de l'élément de liaison 5. Dit en d'autres mots, l'au moins une portion filaire 7 de chaque interconnecteur 4 est dépourvue de matière constitutive de l'élément de liaison 5. En effet, ce dernier assure uniquement le maintien mécanique des interconnecteurs 4 entre eux, en interagissant exclusivement les plots 6.

D'une manière générale, lorsqu'un interconnecteur 4 comprend au moins une première portion filaire 7a et une deuxième portion filaire 7b, au moins l'une des portions filaires 7 est divisée en deux parties 17, 17b s'étendant de part et d'autre du plot 6 et est dépourvue de matière constitutive de l'élément de liaison 5. Avantageusement, sur la figure 1 et les figures suivantes, les deux portions filaires 7 sont divisées en deux parties 17a, 17b s'étendant de part et d'autre du plot 6 et sont dépourvues de matière constitutive de l'élément de liaison 5.

Dépourvoir les portions filaires 7 de matière constitutive de l'élément de liaison 5 permet de mettre en œuvre un élément de liaison 5 nécessitant moins de matière et améliore ainsi considérablement le coût de production du dispositif d'interconnexion 3 selon l'invention. L'extension spatiale du dispositif d'interconnexion 3 s'en retrouve par ailleurs réduite.

Dans l'optique de limiter les matières premières nécessaire à la production du dispositif d'interconnexion, les portions filaires 7 sont formées d'un brin massif, c'est-à-dire d'un unique brin rigide comparé à un fil multibrins souple et torsadé. Un brin massif permet d'éviter de mettre en place des moyens de protection supplémentaires tel que des zones de maintien de l'élément de liaison 5 recouvrant partiellement ou totalement les portions filaires 7.

Chaque portion filaire 7 est recouverte d'un revêtement émaillé électriquement isolant pour renforcer sa résistance aux agressions extérieures, pour protéger le brin massif contre les phénomènes d'usure tels que l'oxydation ou la corrosion, mais également pour limiter tout risque de contacts électriques. Le brin massif peut être un fil de section ronde tel que cela est illustré sur l'ensemble des figures, mais peut également être un fil de section polygonale, par exemple rectangulaire ou carré.

De préférence, le brin massif présente une section transversale constante sur toute son extension longitudinale, notamment une section circulaire ou rectangulaire constante issue d'un processus de tréfilage. Sa configuration géométrique est obtenue exclusivement par déformation plastique, telle que le pliage, préservant ladite section constante, ce qui le distingue des structures découpées ou embouties à section variable

Le stator 1 comprend par ailleurs un ou plusieurs connecteurs neutres 12 électriquement connectés à une pluralité de zones de contact des terminaux de connexion 21 afin de former un circuit électrique fermé. Tout comme les portions filaires 7, le connecteur neutre 12 est par exemple un brin massif assurant tenue mécanique indépendamment des autres composants.

Selon le mode de réalisation de la figure 1, le dispositif d'interconnexion 3 est avantageusement agencé de manière à être superposable au connecteur neutre 12 selon la direction axiale tout en restant mécaniquement indépendant de ce dernier. Cette modularité permet d'isoler les phases électriques par rapport au circuit de neutre, facilitant ainsi l'assemblage et la maintenance du stator 1.

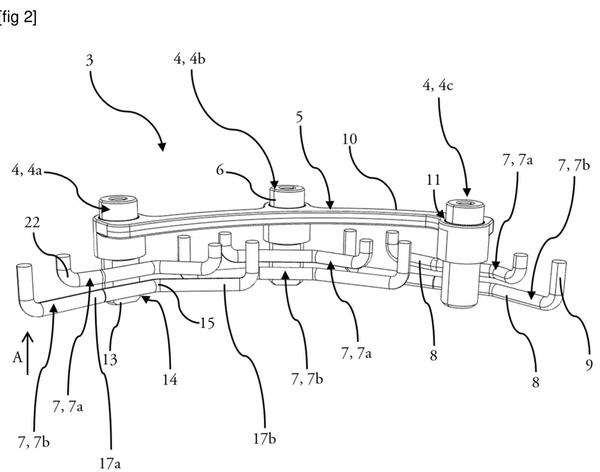

La figure 2 représente le dispositif d'interconnexion 3 seul et vu en perspective depuis l'axe du stator. La figure 2 permet d'observer que, tel que cela a été décrit précédemment, l'élément de liaison 5 ne comprend pas de matière recouvrant les portions filaires 7 des interconnecteurs 4.

Tel que cela a été mentionné précédemment, la section principale 8 des portions filaires 7 est solidaire du plot 6 de l'un des interconnecteurs 4. Pour cela, chaque plot 6 comprend un méplat 13 au niveau duquel les portions filaires 7 sont solidarisées au plot 6. Le méplat 13 garantit une surface plane de réception, ce qui optimise la solidarisation des portions filaires 7 au plot 6. La solidarisation des portions filaires 7 au méplat 13 peut se faire par exemple par soudage.

Avantageusement, la solidarisation du plot 6 sur la section principale 8 s'effectue en un point intermédiaire de ladite section, c'est-à-dire à distance de ses extrémités. Cette disposition définit une jonction en forme de "T" permettant une distribution du courant électrique vers deux directions opposées le long de la section principale à partir d'un unique plot.

Avantageusement et comme illustré sur la figure 2, le plot 6 présente une extension axiale configurée pour servir de colonne de distribution commune à la première portion filaire 7a et à la deuxième portion filaire 7b. Ces portions filaires sont ainsi étagées verticalement le long du plot 6, ce qui permet de multiplier les liaisons électriques vers différentes bobines 2 sans augmenter l'encombrement radial du dispositif d'interconnexion 3. Cette superposition axiale optimise l'espace disponible en périphérie du stator 1.

Comme cela a été mentionné précédemment, les portions filaires 7 sont recouvertes d'un revêtement émaillé électriquement isolant qui ne doit pas gêner la liaison électrique avec le plot 6. Ainsi, préalablement au soudage des portions filaires 7, au moins un point de contact 14 est formé au niveau de la section principale 8 de chaque portion filaire 7, par exemple par enlèvement du revêtement émaillé électriquement isolant, afin de réaliser l'étape de soudage de la portion filaire 7 au plot 6. Il en va de même pour les points de contact 14 formés au niveau des sections terminales 9 où la connexion électrique doit également être établie avec les terminaux de connexion 21, tel que cela est illustré en figure 1.

La section principale 8 de chaque portion filaire 7 comprend un pli 15 configuré pour épouser une forme périphérique du stator. En effet, les bobines étant agencées de manière circonférentielle et devant être connectées à au moins une portion filaire 7, cette dernière doit s'étendre de manière à suivre la courbe du stator afin de se connecter à des bobines qui ne sont pas nécessairement adjacentes. Pour des raisons de stabilité mécanique et électrique, le pli 15 est disposé de sorte à être décalé selon une direction principale de la section principale 8 par rapport à la solidarisation entre la portion filaire 7 et le plot 6.

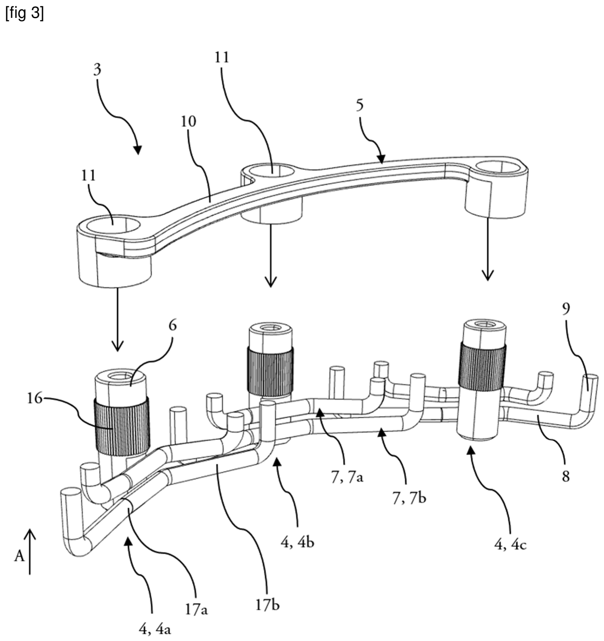

La figure 3 représente une vue éclatée du dispositif d'interconnexion 3 selon l'invention, au niveau de laquelle les interconnecteurs 4 et l'élément de liaison 5 sont séparés. La figure 3 permet d'observer que au moins un des plots 6, et avantageusement chaque plot 6, comprend une périphérie dentée 16. C'est cette zone du plot 6 qui est emmanchée au sein de l'un des orifices 11 de l'élément de liaison 5. La périphérie dentée 16 est ainsi au contact de l'orifice 11 et permet le maintien mécanique entre l'élément de liaison 5 et chaque interconnecteur 4, au moyen de la coopération entre la périphérie dentée 16 et une face interne de l'orifice 11. On note ici que la matière de l'interconnecteur 4, et donc de son plot 6, est métallique. Lors du montage, la périphérie dentée 16 déforme la face interne de l'orifice 11 et assure une liaison mécanique pérenne.

La périphérie dentée 16 est emmanchée dans l'orifice 11 de préférence par montage en force ou par vibration par ultrason. Une fois l'emmanchement effectué, le dispositif d'interconnexion 3 peut être monté au sein du stator, notamment en mettant en œuvre les connexions électriques entre les portions filaires 7 et les terminaux de connexion, tel que cela est illustré en figure 1.

Plus précisément, la périphérie dentée 16 du plot 6 est configurée pour créer une liaison mécanique par incrustation de matière dans la face interne de l'orifice 11 de l'élément de liaison 5 lors de l'emmanchement. Cette interaction génère une liaison auto-bloquante et définitive, assurant la stabilité de la position axiale et circonférentielle du plot 6 sans nécessiter de pièce de maintien supplémentaire ou de capot de recouvrement.

Bien sûr, l'invention n'est pas limitée aux exemples qui viennent d'être décrits et de nombreux aménagements peuvent être apportés à ces exemples sans sortir du cadre de l'invention.

L'invention, telle qu'elle vient d'être décrite, atteint bien le but qu'elle s'est fixé, et permet de proposer un dispositif d'interconnexion comprenant une pluralité d'interconnecteurs, chacun comprenant au moins un plot et une portion filaire d'étendant de part et d'autre du plot. Des variantes non décrites ici pourraient être mises en œuvre sans sortir du contexte de l'invention, dès lors que, conformément à l'invention, elles comprennent un dispositif d'interconnexion conforme à l'invention.

## Revendications

1. Dispositif d'interconnexion (3) pour stator (1) d'une machine électrique tournante, comprenant au moins deux interconnecteurs (4, 4a, 4b, 4c) configurés pour relier électriquement une pluralité de bobines (2) du stator (1) entre elles et un élément de liaison (5) reliant mécaniquement les interconnecteurs (4, 4a, 4b, 4c) entre eux, chaque interconnecteur (4, 4a, 4b, 4c) comprenant un plot (6) qui s'étend selon une direction axiale (A) parallèle à un axe du stator (1) et au moins une portion filaire (7, 7a, 7b) solidaire du plot (6), l'au moins une portion filaire (7, 7a, 7b) étant formée d'un brin massif comprenant une section principale (8) solidaire du plot (6) et qui s'étend dans un plan sécant à la direction axiale (A), et au moins une section terminale (9) et qui s'étend parallèlement à la direction axiale (A) et configurée pour être électriquement connectée à une bobine (2) du stator (1), l'élément de liaison (5) étant solidaire du plot (6) de chaque interconnecteur (4, 4a, 4b, 4c), **caractérisé en ce que** l'au moins une portion filaire (7, 7a, 7b) est divisée en une première partie (17a) et en une deuxième partie (17b), chaque partie de l'au moins une portion filaire (7, 7a, 7b) s'étendant de part et d'autre du plot (6).

2. Dispositif d'interconnexion (3) selon la revendication 1, dans lequel l'au moins une portion filaire (7, 7a, 7b) s'étend intégralement en dehors de l'élément de liaison (5).

3. Dispositif d'interconnexion (3) selon la revendication 1 ou 2, dans lequel la section principale (8) de la portion filaire (7, 7a, 7b) comprend un pli (15) configuré pour épouser une forme périphérique du stator (1).

4. Dispositif d'interconnexion (3) selon l'une quelconque des revendications précédentes, dans lequel la portion filaire (7, 7a, 7b) est un fil de section ronde ou polygonale au moins en partie couvert d'un revêtement émaillé électriquement isolant.

5. Dispositif d'interconnexion (3) selon la revendication précédente, dans lequel la portion filaire (7, 7a, 7b) comprend une pluralité de points de contact (14), chaque point de contact (14) étant solidaire du plot (6) ou configuré pour être solidaire d'une bobine (2) du stator (1), chaque point de contact (14) étant dépourvu du revêtement émaillé électriquement isolant.

6. Dispositif d'interconnexion (3) selon l'une quelconque des revendications précédentes, dans lequel le plot (6) comprend un méplat (13) au niveau duquel la portion filaire (7, 7a, 7b) est solidaire dudit plot (6).

7. Dispositif d'interconnexion (3) selon la revendication précédente, dans lequel la section principale (8) de la portion filaire (7, 7a, 7b) est configurée pour être solidarisée au méplat (13) du plot (6) par soudage.

8. Dispositif d'interconnexion (3) selon l'une quelconque des revendications précédentes, dans lequel au moins un interconnecteur (4, 4a, 4b, 4c) comprend une première portion filaire (7a) et une deuxième portion filaire (7b), chaque portion filaire (7, 7a, 7b) de l'interconnecteur (4, 4a, 4b, 4c) étant solidaire du plot (6) de l'interconnecteur (4, 4a, 4b, 4c) et décalée l'une par rapport à l'autre selon la direction axiale (A).

9. Dispositif d'interconnexion (3) selon la revendication précédente, dans lequel, la première portion filaire (7a) et la deuxième portion filaire (7b) s'étendent intégralement en dehors de l'élément de liaison (5).

10. Dispositif d'interconnexion (3) selon l'une quelconque des revendications précédentes, dans lequel l'élément de liaison (5) comprend une tige courbée (10) configurée pour épouser une forme périphérique du stator (1) et une pluralité d'orifices (11) disposés le long de la tige courbée (10), chaque orifice (11) étant configuré pour recevoir le plot (6) de l'un des interconnecteurs (4, 4a, 4b, 4c).

11. Dispositif d'interconnexion (3) selon la revendication précédente, dans lequel le plot (6) de chaque interconnecteur (4, 4a, 4b, 4c) comprend une périphérie dentée (16) emmanchée au sein de l'un des orifices (11) de l'élément de liaison (5).

12. Dispositif d'interconnexion (3) selon la revendication précédente, dans lequel la périphérie dentée (16) de chaque interconnecteur (4, 4a, 4b, 4c) est emmanchée dans les orifices (11) de l'élément de liaison (5) par montage en force ou par vibration par ultrasons.

13. Dispositif d'interconnexion (3) selon l'une quelconque des revendications 10 à 12, dans lequel l'élément de liaison (5) comprend au moins deux orifices (11) chacun disposés radialement de part et d'autre de la tige courbée (10).

14. Stator (1) pour machine électrique tournante, comprenant une pluralité de bobines (2) et au moins un dispositif d'interconnexion (3) selon l'une quelconque des revendications précédentes reliant électriquement au moins deux bobines (2) entre elles.
